# EUROPÄISCHE PATENTANMELDUNG

(11) **EP 0 980 802 A2**
(43) Veröffentlichungstag der Anmeldung: **23.02.2000**
(21) Anmeldenummer: 99114889.1
(22) Anmeldetag: 30.07.1999
(51) Int. Cl.: B60S 3/06

(54) **Behandlungsverfahren und Behandlungsanlage für Fahrzeuge, insbesondere Wasch- oder Polieranlage**

(30) Priorität: 18.08.1998 DE 29814758 U
(71) Anmelder: California Kleindienst Holding GmbH, 86153 Augsburg (DE)
(72) Erfinder: Rosenberger, Gerhard, 63825 Schöllkrippen (DE)
(74) Vertreter: Ernicke, Hans-Dieter, Dipl.-Ing.

(57) **Zusammenfassung**

Die Erfindung betrifft ein Verfahren und eine Anlage (1) zum Behandeln von Fahrzeugen (2) mit mindestens einer zum Fahrzeug (2) schräg anstellbaren Seitenbürste (3), die an mindestens einer Führung (9) mittels eines Fahrwerks (10) verfahrbar angeordnet und gelenkig gelagert ist. Die Seitenbürste (3) wird mit einer angetriebenen Einrichtung (15) oder zumindest teilweise Aufnahme des Bürstengewichts schräg in einer einstellbaren und fixierbaren Neigung an das Fahrzeug angestellt. Die Schrägstelleinrichtung (15) besitzt einen steuerbaren Zylinder (16).

## Beschreibung

Die Erfindung betrifft ein Behandlungsverfahren und eine Behandlungsanlage für Fahrzeuge, insbesondere eine Wasch- oder Polieranlage mit den Merkmalen im Oberbegriff des Verfahrens- und Vorrichtungshauptanspruchs.

Derartige Behandlungsanlagen sind aus der Praxis bekannt. Sie besitzen in der Regel zwei oder vier Seitenbürsten, die an einer Führung mittels eines Fahrwerkes verfahrbar gelagert und am Fahrwerk gelenkig und z.B. kardanisch aufgehängt sind. Die Seitenbürsten haben in der Ausgangsstellung eine im wesentlichen vertikale Ausrichtung. Bei der Zustellung an die Seitenflächen des Fahrzeuges können die Seitenbürsten durch ihre gelenkige Aufhängung schräg an die Karosserie angestellt werden. Sie passen sich dadurch schrägen Neigungen der Fahrzeugseitenfläche, insbesondere Einzügen im Dachbereich an. Dieses schräge Anstellen erfolgt überdie Bürstenzustellung, indem das Bürstenfahrwerk weiter als normal zur Fahrzeugmitte hin fährt. Bei dieser Bürstenanstellung haben sich bei verschiedenen Bürstenbelägen, insbesondere solchen aus einem geschlossenporigen Kunststoffschaum, Probleme mit der Reinigungswirkung ergeben.

Es ist Aufgabe der vorliegenden Erfindung, eine verbesserte Behandlungsanlage mit Seitenbürsten aufzuzeigen.

Die Erfindung löst diese Aufgabe mit den Merkmalen im Hauptanspruch.
Die erfindungsgemäße Schrägstelleinrichtung bewirkt ein aktives Schrägstellen oder Kippen der Seitenbürste mit einer Antriebs- oder Stützkraft. Dadurch ist die Bürstenschrägstellung unabhängig von der Zustellbewegung des Fahrwerks. Die Seitenbürste kann in ihrer Schräglage durch die genannte Einrichtung gehalten und gestützt werden.

Dies führt zu einer Entlastung der Fahrzeugseitenfläche von der Gewichtskraft der schrägen Seitenbürste. Bei der vorbekannten Schrägstellung, die allein auf der Zustellbewegung des Bürstenfahrwerks beruhte, drückte die Seitenbürste mit vollem Gewicht auf die Fahrzeugseitenfläche im Anlagebereich, was für die Reinigungsprobleme verantwortlich gemacht wird. Mit der erfindungsgegemäß aktiven Schrägstelleinrichtung sind diese Probleme behoben.

Außerdem kann die Regelung der Bürstenzustellung genauer arbeiten, wobei eine optimale Eintauchtiefe der Bürste am Fahrzeug unter Beibehaltung der gewünschten Schrägstellung erreicht wird. Durch die Schrägstelleinrichtung kann in der gewünschten Weise mit oder ohne Neigung der Seitenbürste gewaschen werden. Insbesondere kann die Schrägstelleinrichtung dabei auch die Seitenbürste in der vertikalen Stellung fixieren.

Die Schrägstelleinrichtung für eine vorzugsweise einseitig hängend gelagerte Seitenbürste ist am Fahrwerk angeordnet. Sie stützt sich einerseits am Fahrwerk und andererseits an einem mit der Seitenbürste verbundenen Teil, insbesondere einem geeigneten Beschlag ab. Vorteilhafterweise ist die Schrägstelleinrichtung im Bereich der gelenkigen Aufhängung der Seitenbürste angeordnet, was günstige Bedingungen für Kraft und Bewegung schafft und außerdem einen geringen Bauaufwand und Platzbedarf ermöglicht.

Die erfindungsgemäße Seitenbürstenanordnung ist vor allem für Bürstenbeläge geeignet, die aus einem geschlossenporigen Kunststoffschaum-Material bestehen. Sie läßt sich aber auch mit Vorteil in Verbindung mit anderen Bürstenbelägen einsetzen.

In den Unteransprüchen sind vorteilhafte Ausgestaltungen der Erfindung angegeben.

Die Erfindung ist in den Zeichnungen beispielsweise und schematisch dargestellt. Im einzelnen zeigen:
- Figur 1: : eine Fahrzeugbehandlungsanlage mit Seitenbürsten und einer Schrägstelleinrichtung in Frontansicht,
- Figur2:: ein Bürstenfahrwerk mit der Schrägstelleinrichtung in einer abgebrochenen und vergrößerten Frontansicht,
- Figur 3:: eine Draufsicht auf einen Beschlag gemäß Pfeil III von Figur 2 und
- Figur 4:: die Schrägstelleinrichtung von Figur 2 in schräger Bürstenposition.

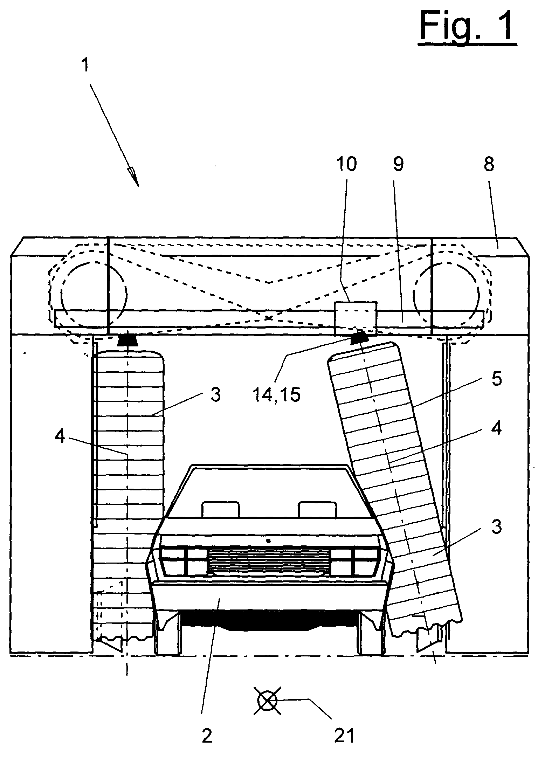

Figur 1 zeigt in einer Übersichtsdarstellung und in Frontansicht eine Behandlungsanlage (1) für Fahrzeuge (2). Hierbei handelt es sich vorzugsweise um eine Fahrzeugwaschanlage oder um eine Fahrzeugpolieranlage. Das Fahrzeug wird mit verschiedenen Aggregaten behandelt. Hierfür ist mindestens eine Seitenbürste (3) vorhanden. Vorzugsweise gibt es zwei oder vier Seitenbürsten (3), die paarweise zu beiden Seiten des Fahrzeuges (2) angeordnet und dabei vorzugsweise einseitig hängend gelagert sind. Die Behandlungsanlage (1) kann darüber hinaus weitere Aggregate enthalten, z.B. eine Hochdruckwascheinrichtung, ein oder mehrere Dachbürsten, Spül- und Auftragsvorrichtungen für Waschwasser, Reinigungsmittel, Konservierungsmittel und dergleichen, eine Trockeneinrichtung, Radwaschbürsten oder andere beliebige geeignete Behandlungsaggregate.

In der gezeigten Ausführungsform handelt es sich um eine Portalanlage mit einem fahrbaren Portal (8), das sich entlang der Längsache (21) gegenüber dem stehenden Fahrzeug (2) bewegt. Alternativ kann auch eine Bürstenstation in einer Autowaschstraße oder einer Polierstraße vorgesehen sein. Auch in einer solchen Station können die Tragvorrichtungen für die Seitenbürsten (3) längsbeweglich als mitlaufende Portale oder dergleichen angeordnet sein.

Die Seitenbürsten (3) sind an einer Führung (9) angeordnet, die sich mit Abstand oberhalb des Bodens befindet und vorzugsweise als Querträger ausgebildet ist, der sich senkrecht oder schräg zur Längsachse (21) erstreckt. Der Querträger (9) ist im Portal (8) befestigt und wird mit diesem längs des Fahrzeuges (2) vor- und zurückbewegt. Alternativ kann anstelle eines Portals (8) auch eine andere Anordnung vorhanden sein, z.B. eine Schienenanordnung mit Laufwerken für den Querträger (8), die auf Ständern oder an der Hallenwand stationär befestigt ist.

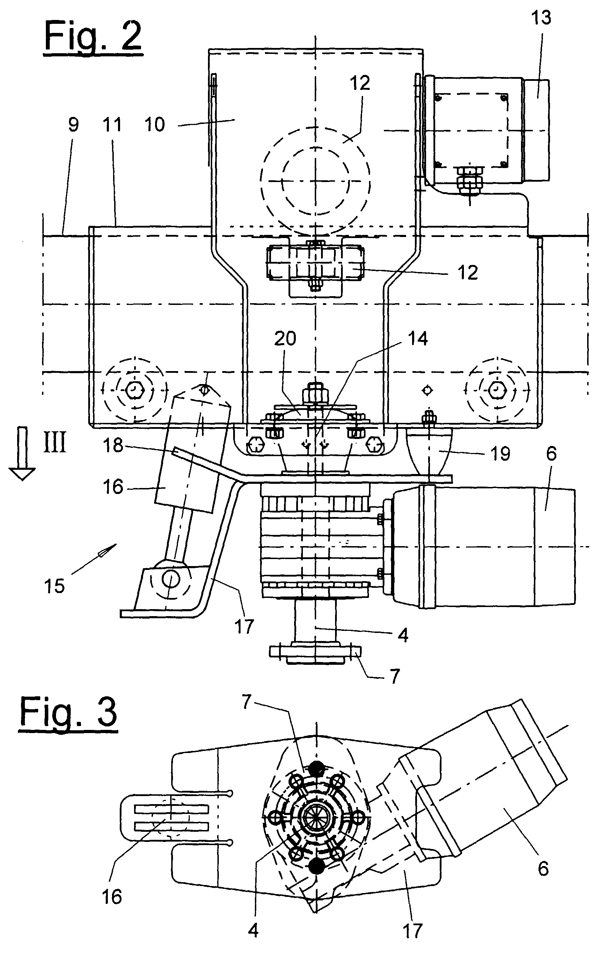

Die Seitenbürsten (3) besitzen jeweils ein Fahrwerk (10), das auf der Führung bzw. dem Querträger (9) verfahrbar angeordnet ist, und einen geeigneten Antrieb (13) aufweist. Am Fahrwerk (10), das in Figur 2 näher dargestellt ist, sind die Seitenbürsten (3) über eine gelenkige Aufhängung (14) gelagert. Diese gelenkige Aufhängung (14) hat mindestens eine Bewegungsachse, die sich im wesentlichen horizontal und parallel zur Längsachse (21) erstreckt. Vorzugsweise handelt es sich um eine kardanische Aufhängung, die außerdem noch eine Schwenkbewegung um die zweite horizontale Achse quer zur Längsachse (21) erlaubt. Die gelenkige Aufhängung (14) kann in beliebig geeigneter Weise ausgebildet sein, z.B. als balliges Gleitlager. Sie kann auch ein oder mehrere Dämpfer (20) zum Dämpfen der Schwenkbewegungen besitzen.

Wie Figur 2 bis 4 näher verdeutlichen, besitzen die Seitenbüsten (3) eine Schrägstelleinrichtung (15), mit der sie in die in Figur 1 in der rechten Bildhälfte gezeigte Schräglage gegenüber den Seitenflächen des Fahrzeuges (2) aktiv gebracht und gehalten werden kann.

In Normalstellung oder Ruhestellung haben die Seitenbürsten (3) dank der gelenkigen Aufhängung (14) eine im wesentlichen senkrechte Ausrichtung mit vertikaler Bürstenachse (4). Figur 1 zeigt diese Anordnung in der linken Bildhälfte. Durch die Schrägstelleinrichtung (15) kann die Seitenbürste (3) mit der Bürstenachse (4) schräg zum Fahrzeug gestellt werden, wobei sie mit ihrem unteren Ende nach außen schwingt. Durch die Schrägstellung kann sich die Seitenbürste (3) der Fahrzeugseitenkontur insbesondere im Dachbereich besser anpassen. Viele moderne Fahrzeuge haben ein sogenanntes eingezogenes Dach, das schmäler ist als der Fahrzeugmittelbereich in Höhe der Türgriffe. Dieser Neigung der Fahrzeugseitenfläche paßt sich die schräg gestellte Seitenbürste (3) an.

Die Schrägstelleinrichtung (15) ist am Fahrwerk (14) angeordnet und wirkt mit einer Stell- und Haltekraft auf die Seitenbürste (3) ein. Die Seitenbürste (3) wird dadurch aktiv in die gezeigte Schrägstellung geschwenkt und in dieser gehalten. Mittels des Fahrwerks (14) kann dann die schräge Seitenbürste (3) in geeigneter Weise der Fahrzeugseitenfläche angenähert und zugestellt werden. Das Gewicht der schräg gestellten Seitenbürste (3) wird dabei im wesentlichen über die Schrägstelleinrichtung (15) abgestützt. Auf die Fahrzeugseitenfläche und die Seitenbürste (3) im Anlagebereich wirkt dann nur die Zustellkraft.

Für die Zustellung der Seitenbürste (3) und deren Steuerung ist eine geeignete Maschinensteuerung (nicht dargestellt) vorhanden. Die Zustellung kann auch in geeigneter Weise geregelt werden, z.B. über das Bürstendrehmoment und die Stromaufnahme des Bürstendrehantriebs (6). Durch die Schrägstelleinrichtung (15) wird eine negative Beeinflussung der Regelung durch die Bürstenschräglage vermieden. Die Seitenbürste (3) behält ihre gewünschte Neigung und Eintauchtiefe am Fahrzeug. Beim Stand der Technik reagierte die Zustellregelung auf das Eigengewicht der schräggestellten Bürste und bewegte die Seitenbürste zurück, wodurch die Bürstenneigung unerwünscht steiler wurde und der Dachübergang nicht mehr sauber gewaschen wurde. Die Schrägstelleinrichtung (15) beseitigt dieses Problem.

Die Seitenbrüsten (3) können einen beliebig geeigneten Bürstenbelag (5) aufweisen. Vorzugsweise besteht dieser aus einem geschlossenporigen Kunststoffschaum-Material, wie es z.B. in der EP 0 787 446 genannt ist. Dieses Material kann in Form von dünnen Einzelstreifen oder flächigen Lappen mit freigeschnittenen Steifen an den Enden oder in beliebig anderer geeigneter Form vorliegen. Alternativ kann es sich um dünne fadenähnliche Borsten aus Kunststoff oder um textile Materialien handeln. Das genannte geschlossenporige Kunststoffmaterial besteht vorzugsweise aus einem Polyäthylen-Schaum oder aus anderen in der vorgenannten EP-Schrift erwähnten Materialien.

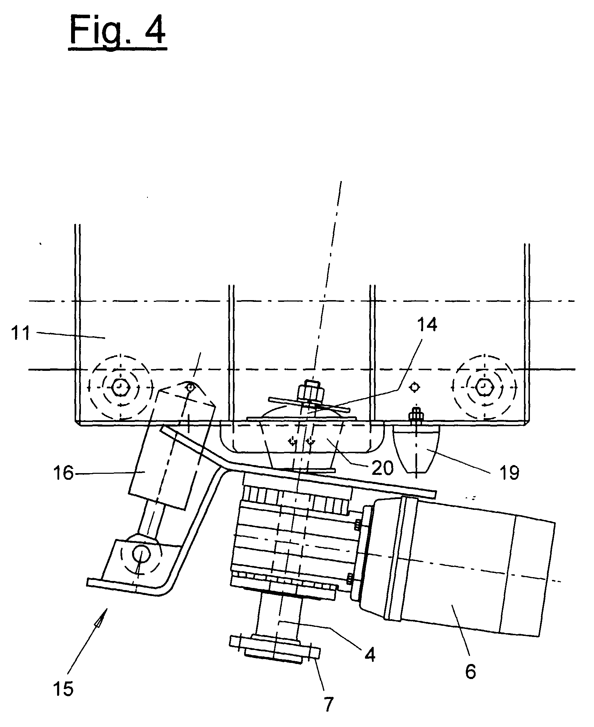

Figur 2 bis 4 zeigen die Schrägstelleinrichtung (15) im Detail. Sie ist vorzugsweise im Bereich der gelenkigen Aufhängung (14) der Seitenbürste (3) angeordnet und stützt sich einerseits am Gehäuse (11) des Fahrwerks (10) und andererseits unterhalb der Lagerstelle an einem mit der Seitenbürste (3) verbundenen bügelförmigen Beschlag (17) ab. Die Schrägstelleinrichtung (15) besitzt mindestens einen Zylinder (16) und ein anderes geeignetes Antriebsorgan. Der Zylinder (16) ist mit seinem rückwärtigen Gehäuseauge am Fahrwerksgehäuse (11) gelenkig aufgehängt und greift mit seinem kolbenseitigen Auge ebenfalls gelenkig am Beschlag (17) an. In der gezeigten Ausführungsform zieht der Zylinder (16) die Seitenbürste (3) in die in Figur 4 gezeigte Schräglage.

Aus Figur 2 sind auch die weiteren konstruktiven Details ersichtlich. Das Fahrwerksgehäuse (11) übergreift die schienenartige Führung (9) bzw. den Querträger (9) und stützt sich hierauf mit vertikalen und horizontalen Führungsrollen (12) an der Oberseite und den Seitenflächen ab. Der Bürstendrehantrieb (6) befindet sich unterhalb der gelenkigen Aufhängung (14) und wirkt über einen Befestigungsflansch (7) auf die Seitenbürste (3) ein, die in Figur 2 bis 4 nicht dargestellt ist. Der Drehantrieb (6) ist in beliebig geeigneter Weise, z.B. als Elektromotor ausgebildet und besitzt ein vorgeschaltetes Getriebe. In ähnlicher Weise kann auch der Fahrantrieb (13) für das Fahrwerk (10) ausgebildet sein.

Figur 3 verdeutlicht in der Draufsicht den bügelförmigen Beschlag (17). Er besitzt eine im Bereich der Bürstendrehachse (4) im wesentlichen ebene Beschlagplatte, die in Ruhestellung der Seitenbürste (3) horizontal ausgerichtet ist und die an der Unterseite mit den Teilen des Drehantriebs (6) und dem Befestigungsflansch (7) verbunden ist. An der dem Zylinder (16) gegenüberliegenden Seite kann auch ein elastischer Puffer (19) angreifen, der an der Unterseite des Fahrwerksgehäuses (11) angeordnet ist und die Rückstellbewegungen der Seitenbürste (3) nach dem Zurückschwenken in die vertikale Ausgangslage dämpft. In der vertikalen Ruhe- oder Ausgangsposition liegt der Beschlag (17) am Puffer (19) an und wird von diesem auch in dieser Lage stabilisiert. Zusätzlich kann hier auch der Zylinder (16) stabilisierend einwirken und den Beschlag (17) gegen den Puffer (19) drücken.

Im Bereich des Zylinders (16) ist der Beschlag (17) gabelförmig ausgebildet und mit seinem Mittelteil schräg nach unten abgewinkelt. Am unteren Ende greift der Zylinder (16) an. Die beiden außenseitigen Gabelteile des Beschlages (17) sind gemäß Figur 2 schräg nach oben abgewinkelt und dienen als Anschlag (18) für die Schrägstellung der Seitenbrüste (3). Figur 4 zeigt diese Stellung, in der der Anschlag (18) an der Unterseite des Fahrwerksgehäuses (11) anschlägt.

In der gezeigten Ausführungsform wirkt der Zylinder (16) einseitig. Er wird von der Maschinensteuerung angesteuert. In der eingefahrenen Endlage stellt er die Seitenbürste (3) gemäß Figur 4 schräg. In der ausgefahrenen Endlage stabilisiert er die vertikale Ausgangsstellung der Seitenbürste (3). In der einfachen Ausführungsform gibt es damit nur zwei Bürstenstellungen. Die Schräglage ist in ihrem Winkel fest vorgegeben, wobei dieser Winkel auf die in der Regel vorkommenden und üblichen Neigungen der Fahrzeugseitenflächen optimiert ist. Alternativ kann der Zylinder (16) auch verschiedene Zwischenstellungen einnehmen und der Seitenbrüste (3) verschiedene Schrägstellungswinkel ermöglichen. Dies läßt sich z.B. in Verbindung mit einer geeigneten Erfassung der Fahrzeugseitenkontur und der Seitenflächenneigungen realisieren. Auf diese Weise ist eine genauere Anpassung der Bürstenschräglage möglich.

In einer weiteren Variante kann der Zylinder (16) beidseitig wirken, wobei der Puffer (19) entfällt. Der Zylinder (16) kann dann die Seitenbürste (3) nach zwei Richtungen schräg stellen. In der einen Richtung zieht er sie in die in Figur 4 gezeigte Schräglage, während er in der voll ausgefahrenen Stellung in die Gegenrichtung drückt. In der Mittelstellung hält der Zylinder (16) die Seitenbürste senkrecht. Die genannten Funktionen können auch von jeder beliebigen anderen Ausgestaltung der Schrägstelleinrichtung (15) und von anderen Antriebsorganen ausgeübt werden.

Bei der Fahrzeugwäsche bearbeiten die beiden Seitenbürsten (3) zunächst die Fahrzeugfront, wobei sie eine im wesentlichen senkrechte Lage einnehmen. Sobald die Frontwäsche beendet ist, fahren die Seitenbürsten (3) wieder auseinander, schwenken um die Fahrzeugecken herum und bearbeiten die Fahrzeugseitenflächen. Hier behalten sie vorzugsweise immer noch ihre vertikale Lage bei. Sobald sie das Ende der Motorhaube und etwa den Spiegelbereich erreicht haben, wird die Schrägstelleinrichtung (15) aktiviert und stellt die Seitenbürsten (3) in der gezeigten Weise schräg. Zugleich können die Seitenbürsten (3) über die Fahrwerksbewegung etwas zur Fahrzeugmitte hin verfahren und näher an die Fahrzeugseitenflächen zugestellt werden. Die Zustellbewegungen werden in Abhängigkeit von der Bürstenanpreßkraft oder anderen geeigneten physikalischen Kriterien geregelt, z.B. durch Drehmomentenaufnahme oder Messung des Motorstroms am Bürstendrehantrieb (6). Bei einer Konturenerfassung kann die Zustellung auch anhand der ermittelten Fahrzeugabmessungen vorgenommen werden. Die Schrägstellung der Seitenbürsten (3) wird im Bereich des Daches und der Front- und Heckscheibe aufrechterhalten. Im Kofferraumbereich kann dann wieder eine Vertikalstellung der Seitenbürsten (3) erfolgen, die auch bei der Heckwäsche erhalten bleibt. Vorzugsweise findet das schräg stellen der Seitenbürsten (3) nur während eines Waschlaufs, z.B. während es ersten Vorlaufs statt. Beim nächsten Waschlauf, z.B. dem Rücklauf, wird die Schrägstelleinrichtung (15) deaktiviert und die Seitenbürsten (3) behalten ihre im wesentlichen vertikale Lage bei. Auch bei eventuellen weiteren Waschläufen bleibt diese Stellung vorzugsweise erhalten. Dadurch können auch die unteren Schwellerbereiche des Fahrzeuges sauber gewaschen werden, die bei schräg gestellten Seitenbürsten (3) nicht immer optimal erreicht werden.

Abwandlungen der gezeigten Ausführungsform sind in verschiedener Weise möglich. So lassen sich die Seitenbürsten (3) mit ihrer Aufhängung, Antrieb und Lagerung beliebig variieren. Auch die Schrägstelleinrichtung (15) kann variieren, insbesondere hinsichtlich der Antriebsorgane, der Anschläge oder der Steuermechanismen. Beispielsweise kann die Seitenbürste an beiden Enden über Schwenkarme oder dgl. gelenkig gelagert und abgestützt sein, wobei die Lagerstellen zur Schrägstellung der Bürste relativ zueinander mit einem Antrieb bewegt werden.

### BEZUGSZEICHENLISTE

- 1: Behandlungsanlage, Waschanlage
- 2: Fahrzeug
- 3: Seitenbürste
- 4: Bürstenachse
- 5: Bürstenbelag
- 6: Bürstenantrieb, Drehantrieb
- 7: Befestigungsflansch
- 8: Portal
- 9: Führung, Querträger
- 10: Fahrwerk
- 11: Gehäuse
- 12: Führungsrollen
- 13: Antrieb
- 14: gelenkige Aufhängung, Lager
- 15: Schrägstelleinrichtung
- 16: Zylinder
- 17: Beschlag, Bügel
- 18: Anschlag
- 19: Puffer
- 20: Dämpfer
- 21: Längsachse

## Patentansprüche

1. Verfahren zum Behandeln von Fahrzeugen (2) in einer Behandlungsanlage (1), insbesondere einer Wasch- oder Polieranlage, mit mindestens einer zum Fahrzeug (2) schräg anstellbaren Seitenbürste (3), die an mindestens einer Führung (9) mittels eines Fahrwerks (10) verfahrbar angeordnet und gelenkig gelagert ist, dadurch **gekennzeichnet**, daß die Seitenbürste (3) mit einer angetriebenen Einrichtung (15) unter zumindest teilweiser Aufnahme des Bürstengewichts schräg an das Fahrzeug (2) angestellt wird.

2. Verfahren nach Anspruch 1, dadurch **gekennzeichnet**, daß die Seitenbürste (3) mit einer einstellbaren und fixierbaren Neigung schräg an das Fahrzeug (2) angestellt wird.

3. Behandlungsanlage für Fahrzeuge (2), insbesondere Wasch- oder Polieranlage, mit mindestens einer zum Fahrzeug (2) schräg anstellbaren Seitenbürste (3), die an mindestens einer Führung (9) mittels eines Fahrwerks (10) verfahrbar angeordnet und gelenkig gelagert ist, dadurch **gekennzeichnet**, daß die Behandlungsanlage (1) eine angetriebene Einrichtung (15) zum aktiven Schrägstellen der Seitenbürste (3) aufweist.

4. Behandlungsanlage nach Anspruch 3, dadurch **gekennzeichnet**, daß die Seitenbürste (3) einseitig hängend gelagert ist und die Schrägstelleinrichtung (15) am Fahrwerk (10) angeordnet ist

5. Behandlungsanlage nach Anspruch 3 oder 4, dadurch **gekennzeichnet**, daß die Schrägstelleinrichtung (15) im Bereich der gelenkigen Aufhängung (14) angeordnet ist.

6. Behandlungsanlage nach Anspruch 3, 4 oder 5, dadurch **gekennzeichnet**, daß die Schrägstelleinrichtung (15) einen Zylinder (16) aufweist.

7. Behandlungsanlage nach einem der Ansprüche 3 bis 6, dadurch **gekennzeichnet**, daß die Schrägstelleinrichtung (15) steuerbar ist.

8. Behandlungsanlage nach einem der Ansprüche 3 bis 7, dadurch **gekennzeichnet**, daß die Schrägstelleinrichtung (15) beidseitig wirkt.

9. Behandlungsanlage nach einem der Ansprüche 3 bis 8, dadurch **gekennzeichnet**, daß die Schrägstelleinrichtung (15) einseitig wirkt, wobei die Seitenbürste (3) in Gegenrichtung einen Puffer (19) aufweist.

10. Behandlungsanlage nach einem der Ansprüche 3 bis 9, dadurch **gekennzeichnet**, daß die Schrägstelleinrichtung (15) einen Anschlag (18) zur Hubbegrenzung aufweist.

11. Behandlungsanlage nach einem der Ansprüche 3 bis 10, dadurch **gekennzeichnet**, daß die Schrägstelleinrichtung (15) einen mit der Seitenbürste (3) verbundenen Beschlag (17) aufweist, an dem der am Fahrwerk (10) gelagerte Zylinder (16) angreift.

12. Behandlungsanlage nach einem der Ansprüche 3 bis 11, dadurch **gekennzeichnet**, daß der Anschlag (18) am Beschlag (17) angeordnet ist.

13. Behandlungsanlage nach einem der Ansprüche 3 bis 12, dadurch **gekennzeichnet**, daß die Seitenbürste (3) einen Bürstenbelag aus einem geschlossenporigen Kunststoffschaum aufweist.

14. Behandlungsanlage nach einem der Ansprüche 3 bis 13, dadurch **gekennzeichnet**, daß die Seitenbürste (3) einen Bürstenantrieb (6) aufweist, der mit der Seitenbürste (3) schwenkbar gelagert ist.
